# EUROPÄISCHE PATENTANMELDUNG

(11) **EP 2 772 456 A1**
(43) Veröffentlichungstag der Anmeldung: **03.09.2014**
(21) Anmeldenummer: 14156932.7
(22) Anmeldetag: 27.02.2014
(51) Int. Cl.: B65G 43/02

(54) **Fördervorrichtung zum Fördern von tierischen Produkten in einem landwirtschaftlichen Betrieb**

(30) Priorität: 01.03.2013 DE 202013001935 U
(71) Anmelder: Big Dutchman International GmbH, 49377 Vechta (DE)
(72) Erfinder: Halbritter, Lars, 49393 Lohne (DE)
(74) Vertreter: Eisenführ Speiser

(57) **Zusammenfassung**

Die Erfindung betrifft eine Fördervorrichtung (100) zum Fördern von tierischen Produkten (200) in einem landwirtschaftlichen Betrieb sowie eine Antriebsvorrichtung für eine solche Fördervorrichtung. Ferner betrifft die Erfindung ein Verfahren zum Fördern von tierischen Produkten in einem landwirtschaftlichen Betrieb mittels einer Fördervorrichtung. Die Fördervorrichtung (100) umfasst ein Förderband (300), einen Bandantrieb zum Antreiben des Förderbandes in mindestens einer Förderrichtung (FR), und eine Messeinrichtung (130, 131, 132, 133, 134), die ausgebildet und angeordnet ist, ein Maß für eine Beladung des Förderbandes zu ermitteln, wobei das Maß für die Beladung des Förderbandes (300) ein Leistungswert des Bandantriebs und/oder eine Lagerreaktion eines Lagers des Bandantriebs ist.

## Beschreibung

Die Erfindung betrifft eine Fördervorrichtung zum Fördern von tierischen Produkten in einem landwirtschaftlichen Betrieb sowie eine Antriebsvorrichtung für eine solche Fördervorrichtung.

Ferner betrifft die Erfindung ein Verfahren zum Fördern von tierischen Produkten in einem landwirtschaftlichen Betrieb mittels einer Fördervorrichtung.

In landwirtschaftlichen Betrieben, insbesondere Stallanlagen werden tierische Produkte erzeugt. In modernen, hochtechnisierten Stallanlagen werden die Umgebungsbedingungen der Tiere optimiert, um eine artgerechte und gleichzeitig effiziente Produktion zu ermöglichen. Unter tierischen Produkten werden hier insbesondere Produkte aus der Geflügelhaltung verstanden, wie beispielsweise Eier oder Fleisch, z.B. auch ganze Tiere, wie etwa Broiler. Aber auch Nebenprodukte dieser Produktion, wie z.B. Tierkot, die bei der Aufzucht, Eierproduktion oder Fleischproduktion, wie Hähnchenmast, entstehen, werden hier als tierische Produkte verstanden.

Ein Bestandteil moderner Stallanlagen sind Fördervorrichtungen zum Fördern von tierischen Produkten mit einem Förderband, meist einem Endlos-Förderband, und einem Bandantrieb, der das Förderband in mindestens einer Förderrichtung antreibt. Solche Steuervorrichtung dienen insbesondere dazu, aus verschiedenen Tierhaltungssystemen (Kleingruppe, Voliere, Käfig etc.) tierische Produkte schnell und zuverlässig ab- bzw. weiterzutransportieren. Derartige Tierhaltungs- und Fördereinrichtungen sind in der Regel mehretagig ausgeführt, wobei die Etagen vertikal übereinander, aber auch seitlich versetzt übereinander in einer Stallanlage angeordnet sein können.

Bei Fördervorrichtungen zum Fördern von Kot kann zusätzlich vorgesehen sein, den Kot zu belüften, um ihn zu trocknen oder in separaten Trocknungsanlagen zu trocknen, in denen ebenfalls eingangs genannte Fördervorrichtungen eingesetzt werden können.

Existierende Fördervorrichtungen können abhängig von der bauartbedingten Ausführung der Bandantriebe eine maximale Zugkraft auf das Förderband ausüben. Die Masse bzw. Menge der auf dem Förderband befindlichen tierischen Produkte und der Reibbeiwert des Förderbandes gegen die abstützende Unterkonstruktion, wie Förderbandunterzüge und/oder Förderbandseitenlagerungen, wirken dieser Zugkraft entgegen. Mit steigender Beladung des Förderbandes mit tierischen Produkten kann es zu einer Überladung des Förderbandes kommen, mit der Konsequenz, dass die vom Bandantrieb auf das Förderband aufgebrachte Antriebsleistung, insbesondere Zugkraft, nicht mehr ausreicht, um das Förderband in mindestens einer Förderrichtung anzutreiben. In diesem Fall ist der Weiter- und/oder Abtransport der tierischen Produkte mittels des Förderbandes nicht mehr möglich. Gleichzeitig ist eine solche Überladung des Förderbandes auch nicht oder nur schwer umkehrbar, da die tierischen Produkte, wie beispielsweise Eier, Kot oder Masthähnchen gerade zum Abtransport auf das Förderband gelangt sind und von dort nicht zurück an ihren Ursprungsort gebracht werden können und/oder sollen.

Eine derartige Überladung kann beim Einsatz einer Fördervorrichtung zum Abtransport von Kot beispielsweise zustande kommen durch zu lange Entmistungsintervalle. In der Regel wird abhängig von der Tieranzahl der über dem Förderband befindlichen Haltungseinrichtung und damit abhängig vom Kotmassenanfall pro Tag und Meter Förderband in ganztägigen Intervallen entmistet. Dies kann beispielsweise täglich erforderlich sein. Meistens wird aber eine zweitätige, dreitätige oder n-tägige Entmistung praktiziert. Dabei wird beispielsweise die gesamte Länge der Fördereinrichtung entmistet oder jeweils eine bestimmte Teillänge z. B. ein Drittel der Länge der Fördereinrichtung. Das arbeitswirtschaftliche Interesse des Landwirts besteht in einem möglichst langen Entmistungsintervall. Die bei langen Entmistungsintervallen anfallenden Kotmengen können jedoch so groß sein, dass eine unerwünschte Überladung des Förderbands erfolgt mit der Konsequenz eines Stillstands der Fördervorrichtung.

Ein weiterer Grund aus Sicht des Landwirts für ein möglichst langes Entmistungsintervall ist, dass bei einer installierten Kotbelüftung der Kot möglichst über einen längeren Zeitraum auf dem Förderband liegend belüftet und damit getrocknet werden kann. Höhere Trockensubstanzgehalte reduzieren die Umsetzung von Harnstoffen in Ammoniak, was zur Verbesserung des Stallklimas und Reduzierung der Ammoniakemissionen in die Umwelt beiträgt. Der Trocknungseffekt reduziert die auf dem Förderband aufliegende Kotmasse, wodurch längere Entmistungsintervalle möglich werden können. Beispielsweise aufgrund von Störungen kann es jedoch erforderlich sein, in kürzeren Intervallen zu entmisten, etwa nach einer Leckage in der Wasserversorgung der Tiere. In einem solchen Fall kann Wasser auf das Förderband gelangen und dementsprechend die Kotmasse wieder erhöhen. Eine Überladung des Förderbandes zeigt sich insbesondere dadurch, dass das Förderband stillsteht, da der Bandantrieb nicht mehr in der Lage ist, das Förderband in mindestens einer Förderrichtung anzutreiben. In einer solchen Situation sind der Kot oder andere tierische Produkte dann manuell vom Förderband zu entladen.

In einem anderen Anwendungsgebiet werden Fördervorrichtungen genutzt, um ganze Tiere, beispielsweise Masthähnchen, mit Hilfe des Förderbandes abzutransportieren. Hierbei wird der Boden der Haltungsvorrichtung der Masthähnchen derart geöffnet, dass die Tiere auf das Förderband gelangen und abtransportiert werden. Eine Überladung des Förderbandes kann in diesem Einsatzgebiet insbesondere dadurch auftreten, dass die mit dem Öffnen der Böden der Haltungseinrichtungen betrauten Arbeiter mehr Tiermaterial pro Zeiteinheit auf das Förderband aufgeben, als dieses in der gleichen Zeiteinheit abtransportieren kann. Auch hier kann die Überladung des Förderbandes zur Konsequenz haben, dass die Antriebsleistung des Bandantriebs nicht mehr zum Antreiben des Förderbandes ausreicht und/oder Schlupf zwischen der Förderrolle des Bandantriebs und dem Förderband entsteht, und das Förderband manuell entladen werden muss.

Es ist daher eine Aufgabe der vorliegenden Erfindung, eine Vorrichtung und ein Verfahren zum Fördern von tierischen Produkten in einem landwirtschaftlichen Betrieb bereitzustellen, die einen oder mehrere der genannten Nachteile vermindern oder beseitigen. Insbesondere ist es eine Aufgabe der vorliegenden Erfindung, eine Vorrichtung und ein Verfahren zum Fördern von tierischen Produkten in einem landwirtschaftlichen Betrieb bereitzustellen, welche eine Überladung des Förderbandes einer Fördervorrichtung verhindern oder reduzieren.

Diese Aufgabe wird erfindungsgemäß gelöst durch eine Fördervorrichtung zum Fördern von tierischen Produkten in einem landwirtschaftlichen Betrieb, umfassend ein Förderband, einen Bandantrieb zum Antreiben des Förderbandes in mindestens einer Förderrichtung, eine Messeinrichtung, die ausgebildet und angeordnet ist, ein Maß für eine Beladung des Förderbandes zu ermitteln, wobei das Maß für die Beladung des Förderbandes ein Leistungswert des Bandantriebs und/oder eine Lagerreaktion eines Lagers des Bandantriebs ist. Ein Leistungswert des Bandantriebs kann insbesondere eine Stromaufnahme und/oder ein Drehmoment des Bandantriebs sein.

Unter eine Überladung des Förderbandes einer Fördervorrichtung wird hier ein Zustand verstanden, bei dem die Masse und/oder Menge an tierischen Produkten auf dem Förderband so groß ist, dass die Antriebsleistung des Bandantriebs nicht mehr ausreicht, um das Förderband in mindestens einer Förderrichtung anzutreiben. Unter Beladung des Förderbandes werden hier tierische Produkte verstanden, die auf das Förderband aufgegeben wurden (beispielsweise durch Mitarbeiter auf das Förderband aufgelegt wurden oder beispielsweise durch Schwerkrafteinwirkung auf das Förderband gefallen sind) und sich zum Ab- und/oder Weitertransport auf dem Förderband befinden.

Das Förderband ist vorzugsweise als Endlos-Förderband mit einem Obertrum, auf dem tierische Produkte gefördert werden, und mit einem Untertrum ausgebildet und weist beispielsweise auf der Ausförderseite einen Bandantrieb mit einer Antriebsrolle auf und auf der gegenüberliegenden Seite eine Umlenkrolle. Das Förderband kann mit Hilfe von Andruckrollen an die Antriebsrolle gedrückt werden, so dass eine hohe Anpresskraft und dadurch eine entsprechende Reibung zwischen dem Förderband und der Antriebsrolle entsteht und das Förderband durch die Drehung der Antriebsrolle in mindestens einer Förderrichtung angetrieben wird. Vorzugsweise ist der Bandantrieb als beidseitig gelagerte, angetriebene Antriebsrolle ausgebildet. Die Lager sind vorzugsweise in einem Antriebsgehäuse und/oder an einem Seiten- bzw. Antriebsgestell angeordnet. Ferner können Abstreifer an der Antriebsrolle vorgesehen sein, die zur Reinigung des Förderbandes dienen. Vorzugsweise kann das Förderband in mehr als einer Förderrichtung angetrieben werden, beispielsweise in zwei einander entgegengesetzten Förderrichtungen. Der Bandantrieb, insbesondere eine Antriebsrolle, kann dazu vorzugsweise ausgebildet sein, in entsprechend verschiedene Richtungen drehen zu können. Es können auch mehrere Bandantriebe vorgesehen sein, insbesondere Förderbänder für Kot können mehretagig mit mindestens einem Bandantrieb pro Etage ausgebildet sein.

Für eine Positionsveränderung eines Lagers des Bandantriebs kann ein Verstellmechanismus vorgesehen sein, beispielsweise in Form einer Verstellplatte, zur Aufnahme eines Lagers des Bandantriebs. Wie in der Gebrauchsmusteranmeldung DE 20 2012 010 170.6 der Anmelderin beschrieben ist, kann dieser Verstellmechanismus beispielsweise durch eine Korrekturvorrichtung derart bewegt werden, dass eine Positionsveränderung des Lagers des Bandantriebs eintritt, wodurch eine gewünschte Verlaufskorrektur des Förderbandes erzielt werden kann.

Die Erfindung beruht unter anderem auf der Erkenntnis, dass zur Verhinderung einer Überladung des Förderbandes zunächst die Kenntnis über ein Maß für die Beladung des Förderbandes erforderlich ist. Es ist daher vorgesehen, die Fördervorrichtung mit einer Messeinrichtung zu versehen, mit der ein solches Maß für eine Beladung des Förderbandes ermittelt werden kann. Als Maß für eine Beladung des Förderbandes wird hier eine Größe verstanden, aus der (direkt oder indirekt) Rückschlüsse auf eine, vorzugsweise aktuelle, Beladung des Förderbandes gezogen werden können. Die Messeinrichtung ermittelt vorzugsweise einen im Zeitpunkt der Ermittlung aktuellen Wert für das Maß für die Beladung des Förderbandes.

Die Kenntnis eines Maßes für die Beladung des Förderbandes, insbesondere die aktuelle Beladung des Förderbandes, ermöglicht es überhaupt erst, vor dem tatsächlichen Eintritt des Überladungsfalles, der sich eben durch einen Stillstand des Förderbandes zeigt, einzugreifen und eine solche Überladung möglichst zu verhindern. Auf diese Weise kann ein Stillstand der Fördervorrichtung - und damit eine manuelle Entladung des Förderbandes - verhindert werden, indem ein Ab- bzw. Weitertransport initiiert wird, bevor eine Überladung erreicht wird.

Das Maß für eine Beladung des Förderbandes ist ein Leistungswert des Bandantriebs, insbesondere eine Stromaufnahme und/oder ein Drehmoment des Bandantriebs und/oder eine Lagerreaktion eines Lagers des Bandantriebs.

Bevorzugte Beispiele für mögliche weitere Maße für eine Beladung des Förderbandes sind eine dehnende Verformung eines Elements der Fördervorrichtung; eine auf ein Element der Fördervorrichtung wirkende Kraft, insbesondere Druck- und/oder Zugkraft; ein Gewicht der auf einem Abschnitt des Förderbandes befindlichen tierischen Produkte; eine Abweichung, insbesondere in vertikaler Richtung, einer Lage eines Abschnitts des Förderbandes von einer Initiallage; und/oder ein Förderbandfortschritt, insbesondere eine Förderbandgeschwindigkeit.

Bevorzugte Beispiele für eine Messeinrichtung zur Ermittlung eines solchen Maßes sind ein Kraftsensor, insbesondere ein Drucksensor und/oder Zugsensor, beispielsweise Wägezelle und/oder Dehnungsmessstreifen; ein Drehmomentsensor, beispielsweise Dehnungsmessstreifen; Strommessvorrichtung; ein Abstandssensor; und/oder ein Förderbandfortschrittsdetektor, insbesondere Drehzahlwächter und/oder Messrad.

Vorzugsweise können außerhalb des eigentlichen Betriebs der Fördervorrichtung Messläufe des Förderbandes durchgeführt werden, um beispielsweise eine Kalibrierung des Maßes für die Beladung des Förderbandes durchzuführen und/oder eine jeweils aktuell vorliegende Beladung des Förderbandes zu ermitteln. Solche Messläufe sind vorzugsweise zeitlich voneinander beabstandet und dauern nur kurz an, vorzugsweise weniger als 10 Sekunden, insbesondere weniger als 5 Sekunden, um den eigentlichen Betrieb des Förderbandes bzw. der Fördervorrichtung nicht zu beeinflussen.

Besonders bevorzugt ist eine Ausgestaltung der Fördervorrichtung mit einer Steuervorrichtung, die ausgebildet ist, das ermittelte Maß für die Beladung des Förderbandes mit einem Sollwert zu vergleichen und vorzugsweise eine Warnmeldung zu generieren, wenn ein vorbestimmter Abstand zu dem Sollwert über- oder unterschritten wird.

Die Steuervorrichtung ist mit der Messeinrichtung vorzugsweise signaltechnisch verbunden, insbesondere um ein von der Messeinrichtung ermitteltes Maß für eine Beladung des Förderbandes zu empfangen. Ferner kann die Steuervorrichtung beispielsweise eine Speichereinheit umfassen, in der vorzugsweise ein Sollwert für das Maß für die Beladung des Förderbandes abgespeichert werden kann. Ein solcher Sollwert kann beispielsweise von einem Benutzer eingegeben bzw. vorgegeben werden und/oder an die Steuervorrichtung gesendet werden, beispielsweise vom Bandantrieb oder einer anderen Vorrichtung. Besonders bevorzugt ist es, wenn ein Sollwert aus zuvor in dieser (oder einer anderen) Fördervorrichtung ermittelten und vorzugsweise im Zeitverlauf abgespeicherten, und ggf. weiterverarbeiteten, Werten für das Maß für die Beladung des Förderbandes abgeleitet und verwendet wird.

Die Steuervorrichtung dient insbesondere dazu, den von der Messeinrichtung ermittelten aktuellen Wert des Maßes für die Beladung des Förderbandes mit einem, vorzugsweise vorbestimmten, Sollwert für dieses Maß zu vergleichen. Der Sollwert ist vorzugsweise so gewählt, dass er einer solchen Beladung des Förderbandes mit tierischen Produkten entspricht, bei der der Bandantrieb das Förderband noch in mindestens einer Förderrichtung antreiben kann, d. h. bei der noch keine Überladung des Förderbandes aufgetreten ist. Wenn sich der aktuelle Wert für das Maß für die Beladung des Förderbandes, der von der Messeinrichtung ermittelt wird, nun diesem Sollwert annähert und dabei ein, vorzugsweise vorbestimmter, Abstand zu dem Sollwert über- bzw. unterschritten wird, wird von der Steuervorrichtung eine Warnmeldung generiert und vorzugsweise auch ausgegeben. Insbesondere ist bevorzugt, dass eine solche Warnmeldung generiert wird, wenn ein vorbestimmter Abstand zwischen dem ermittelten Maß für die Beladung des Förderbandes und dem Sollwert unterschritten wird, d. h. sich der aktuelle Wert zu nah dem Sollwert annähert. Eine solche Annäherung des aktuellen Werts an den Sollwert zeigt eine drohende Überladungssituation an. Durch Generieren und vorzugsweise Ausgeben einer Warnmeldung, beispielsweise eines akustischen und/oder optischen und/oder eines anderen Warnsignals, welches beispielsweise an ein mobiles Endgerät oder einen Computer gesendet werden kann, kann einem Landwirt ein Eingreifen ermöglicht werden, um die drohende Überladungssituation zu verhindern.

Besonders bevorzugt ist, dass eine Signaleinrichtung zur Ausgabe des Warnsignals vorhanden ist. Das Warnsignal kann beispielsweise im Sinne einer Ampelanzeige ausgegeben werden, um unterschiedliche Stadien einer drohenden Überladung anzuzeigen. Dies ist insbesondere dann von Vorteil, wenn eine solche Warnmeldung, insbesondere in Form einer Ampel, den mit dem Beladen des Förderbandes betrauten Arbeiter angezeigt werden kann, so dass diese die Beladungsgeschwindigkeit bzw. die Beladungsmenge entsprechend anpassen können. Beispielsweise in der Hähnchenmast kann dies z. B. in der Form erfolgen, dass die mit dem Öffnen der Böden der Haltungseinrichtungen betrauten Arbeiter in Abhängigkeit von der, vorzugsweise in Ampelform ausgegebenen, Warnmeldung mehr oder weniger Masthähnchen pro Zeiteinheit auf das Band aufgeben, um so einen möglichst gleichmäßigen Massenstrom tierischer Produkte auf dem Förderband ohne Überladung zu erreichen.

In einer weiteren Ausgestaltung ist es bevorzugt, dass die Messeinrichtung ausgebildet ist, das Maß für die Beladung des Förderbandes wiederholt zu ermitteln, beispielsweise in regelmäßigen Abständen und/oder ereignisgesteuert und/oder benutzerinitiiert.

Diese Ausgestaltung sieht vor, dass die Messeinrichtung nicht nur einmalig die Beladung des Förderbandes ermittelt, sondern mehrmalig. Besonders bevorzugt ist eine Ermittlung in regelmäßigen Abständen, die vorzugsweise automatisch erfolgt. Beispielsweise kann eine automatische, regelmäßige Ermittlung eines Werts für das Maß für eine Beladung des Förderbandes durch die Messeinrichtung in einem Intervall von Sekunden, Minuten, Stunden und/oder Tagen erfolgen. Vorzugsweise kann das Intervall von einem Benutzer vorgegeben werden. Zusätzlich oder alternativ kann die Ermittlung eines Werts für das Maß für die Beladung des Förderbandes ereignisgesteuert erfolgen, d. h. beispielsweise immer nach dem Anfahren des Förderbandes, vor und/oder nach einem Entmistungsvorgang und/oder beim Eintreten anderer Ereignisse. Eine weitere zusätzliche oder alternative Möglichkeit ist es, dass ein Benutzer die Ermittlung eines, vorzugsweise aktuellen, Werts des Maßes für eine Beladung des Förderbandes durch die Messeinrichtung initiieren kann.

Durch eine solche wiederholte Ermittlung des Maßes für die Beladung des Förderbandes kann in der Steuervorrichtung vorzugsweise eine zeitliche Entwicklung des Maßes für die Beladung abgeleitet werden.

Die Steuervorrichtung ist ferner vorzugsweise ausgebildet, das ermittelte Maß für die Beladung des Förderbandes mit einem Maximalbeladungswert zu vergleichen und einen durch den Vergleich ermittelten Differenzwert auszugeben.

Der Maximalbeladungswert kann beispielsweise dem, vorzugsweise vorgegebenen, Sollwert entsprechen. Wenn der aktuelle Wert für das Maß für die Beladung des Förderbandes geringer ist als der Maximalbeladungswert, entspricht der Differenzwert einer noch maximal möglichen Zusatzbeladung. Wenn der aktuelle Wert des Maßes für die Beladung des Förderbandes größer ist als der Maximalbeladungswert, gibt der Differenzwert ein Maß für die Überladung des Förderbandes an.

Weitere Vorteile ergeben sich insbesondere dann, wenn die Steuervorrichtung ausgebildet ist, einen maximalen Zusatzbeladungszeitraum aus dem Differenzwert und einem Beladungswert pro Zeit zu ermitteln; und/oder einen maximalen Beladungswert pro Zeit aus dem Differenzwert und einem Zusatzbeladungszeitraum zu ermitteln.

Insbesondere wenn der Differenzwert der maximal möglichen Zusatzbeladung entspricht, also das ermittelte Maß für die Beladung des Förderbandes niedriger ist als der Maximalbeladungswert, kann dieser Differenzwert genutzt werden, um zu ermitteln, wie lange noch bei einer bestimmten Beladungsrate das Förderband beladen werden kann, bevor eine Überladung eintritt und/oder mit welcher Beladungsrate das Förderband für einen vorbestimmten Zeitraum noch beladen werden darf, um ebenfalls eine Überladung zu vermeiden. Auch hier ist es vorteilhaft, wenn die entsprechenden Ergebnisse ausgegeben und angezeigt werden können, um einen Betreiber und/oder Mitarbeitern entsprechend abgestimmte Handlungsmaßnahmen zu ermöglichen.

Dabei ist es ferner besonders bevorzugt, dass die Steuervorrichtung ausgebildet ist, das ermittelte Maß im Zeitverlauf zu speichern und vorzugsweise ein durchschnittliches Maß für eine Beladung des Förderbandes pro Zeiteinheit, vorzugsweise in einem bestimmten Zeitraum, abzuleiten.

Diese Ausgestaltung hat den Vorteil, dass Daten über die Veränderung des Maßes für die Beladung des Förderbandes gespeichert und daraus durchschnittliche Beladungsraten, d. h. eine Beladung des Förderbandes pro Zeiteinheit, abgeleitet werden können, beispielsweise für unterschiedliche Zeiträume unter unterschiedlichen Rahmenbedingungen. Wenn zusätzlich diese Rahmenbedingungen abgespeichert werden können, können diese Daten auch zur Prognose zukünftiger Beladungsraten unter ähnlichen Rahmenbedingungen herangezogen werden.

Wenn also eine bekannte, ermittelte und/oder prognostizierte zu erwartende Zuladung an tierischen Produkten eine zuvor ermittelte oder vorbestimmte, maximale Zuladung überschreitet, wird vorzugsweise ein Warnsignal generiert. Dieses Warnsignal kann, wie oben beschrieben, ein optisches oder akustisches oder ein anderes Signal oder eine Kombination von Signalen sein.

Besonders bevorzugt ist eine Ausgestaltung der Fördervorrichtung, bei der das Maß für die Beladung des Förderbandes mindestens eines aus der folgenden Gruppe ist: ein Leistungswert des Bandantriebs, insbesondere eine Stromaufnahme und/oder ein Drehmoment des Bandantriebs; eine dehnende Verformung eines Elements der Fördervorrichtung; eine auf ein Element der Fördervorrichtung wirkende Kraft, insbesondere Druck- und/oder Zugkraft; eine Lagerreaktion eines Lagers des Bandantriebs; ein Gewicht der auf einem Abschnitt des Förderbandes befindlichen tierischen Produkte; eine Abweichung, insbesondere in vertikaler Richtung, einer Lage eines Abschnitts des Förderbandes von einer Initiallage; ein Förderbandfortschritt, insbesondere eine Förderbandgeschwindigkeit.

Ferner ist besonders bevorzugt, dass die Messeinrichtung ausgebildet ist als Kraftsensor, insbesondere Drucksensor und/oder Zugsensor, beispielsweise Wägezelle und/oder Dehnungsmessstreifen; Drehmomentsensor, beispielsweise Dehnungsmessstreifen; Strommessvorrichtung; Abstandssensor; und/oder Förderbandfortschrittsdetektor, insbesondere Drehzahlwächter und/oder Messrad.

Insbesondere sind Kombinationen von Messeinrichtung und Maß für die Beladung des Förderbandes bevorzugt, die eine entsprechende Passung dahingehend aufweisen, dass die Messeinrichtung das entsprechende Maß für die Beladung des Förderbandes ermitteln kann. Im Folgenden werden einige besonders bevorzugte Kombinationen von Maß für die Beladung des Förderbandes und Messeinrichtung, gegebenenfalls auch deren Anordnung, aufgeführt.

Eine bevorzugte Ausgestaltung einer Fördervorrichtung sieht vor, dass das Maß für die Beladung des Förderbandes eine Stromaufnahme des Bandantriebs ist; und die Messeinrichtung eine Strommessvorrichtung ist, die vorzugsweise ausgebildet und angeordnet ist, einen Strom einer Zuleitung des Bandantriebs zu ermitteln.

Dabei ist es insbesondere bevorzugt, die Messung der Stromaufnahme mit einem Förderbandfortschrittsdetektor, z. B. einem Drehzahlwächter beispielsweise an einer Umlenkrolle oder einem separaten Messrad auf dem Förderband zu kombinieren. Ein solcher Förderbandfortschrittsdetektor kann als Kontrollinstrument eingesetzt werden für die Erkennung, ob Schlupf auftritt. Beginnender Schlupf zeigt an, dass die ermittelte Stromaufnahme kein direktes Maß für die auf das Förderband wirkende Antriebsleistung bzw. Zugkraft mehr ist, sondern bereits eine, ggf. zunächst geringe, Überladung eingetreten ist. Im Extremfall erfolgt trotz hoher Stromaufnahme bei vollständigem Schlupf keine Förderbandbewegung mehr. Besonders bevorzugt ist nicht nur eine Ermittlung, ob Schlupf auftritt oder nicht, sondern auch in welchem Umfang, was als Indikator für die Stärke der Überladung verwendet werden kann.

Eine weitere bevorzugte Ausgestaltung einer Fördervorrichtung sieht vor, dass das Maß für die Beladung des Förderbandes ein Drehmoment des Bandantriebs ist; und die Messeinrichtung mindestens einen Dehnungsmessstreifen umfasst, der vorzugsweise an einem Achszapfen einer Antriebsrolle des Bandantriebs angeordnet ist.

Eine weitere bevorzugte Ausgestaltung einer Fördervorrichtung sieht vor, dass das Maß für die Beladung des Förderbandes eine Lagerreaktion eines Lagers des Bandantriebs ist; und die Messeinrichtung mindestens einen Kraftsensor umfasst, der vorzugsweise an einem Lager einer Antriebsrolle des Bandantriebs angeordnet ist.

Eine weitere bevorzugte Ausgestaltung einer Fördervorrichtung sieht vor, dass das Maß für die Beladung des Förderbandes eine Abweichung in vertikaler Richtung einer Lage eines Abschnitts des Förderbandes zwischen zwei Förderbandträgern von einer Initiallage ist; und die Messeinrichtung mindestens einen Abstandssensor umfasst, der vorzugsweise in vertikaler Richtung unterhalb des Förderbandes zwischen zwei Förderbandträgern angeordnet ist.

Eine weitere bevorzugte Ausgestaltung einer Fördervorrichtung sieht vor, dass das Maß für die Beladung des Förderbandes ein Gewicht der auf einem Abschnitt des Förderbandes befindlichen tierischen Produkte ist; und die Messeinrichtung mindestens eine Wägezelle umfasst, die an einem Förderbandträger, insbesondere einem Förderbandunterzug und/oder Förderbandseitenlagerung, angeordnet ist.

Eine weitere bevorzugte Ausgestaltung einer Fördervorrichtung umfasst eine Korrekturvorrichtung, die ausgebildet und angeordnet ist, in Abhängigkeit eines Korrektursignals eine Ausrichtung des Bandantriebs zu verändern; wobei das Maß für die Beladung des Förderbandes eine auf eine Korrekturvorrichtung wirkende Zugkraft ist; und die Messeinrichtung mindestens einen Dehnungsmessstreifen zur Ermittlung der auf die Korrekturvorrichtung wirkenden Zugkraft und vorzugsweise mindestens einen Förderbandfortschrittsdetektor umfasst.

Gemäß einem weiteren Aspekt wird die Eingangs genannte Aufgabe gelöst durch eine Antriebsvorrichtung für eine Fördervorrichtung zum Fördern von tierischen Produkten in einem landwirtschaftlichen Betrieb, insbesondere für eine zuvor beschriebene Fördervorrichtung, umfassend einen Bandantrieb zum Antreiben eines Förderbandes in einer Förderrichtung, eine Messeinrichtung, die ausgebildet und angeordnet ist, ein Maß für eine Beladung des Förderbandes zu ermitteln, wobei das Maß für die Beladung des Förderbandes ein Leistungswert des Bandantriebs und/oder eine Lagerreaktion eines Lagers des Bandantriebs ist.

Besonders bevorzugte Ausgestaltungen der Antriebsvorrichtungen werden im Folgenden ausgeführt.

Eine bevorzugte Ausgestaltung einer Antriebsvorrichtung umfasst eine Steuervorrichtung, die ausgebildet ist, das ermittelte Maß für die Beladung des Förderbandes mit einem Sollwert zu vergleichen und vorzugsweise eine Warnmeldung zu generieren, wenn ein vorbestimmter Abstand zu dem Sollwert über- oder unterschritten wird.

Eine weitere bevorzugte Ausgestaltung einer Antriebsvorrichtung sieht vor, dass die Messeinrichtung ausgebildet ist, das Maß für die Beladung des Förderbandes wiederholt zu ermitteln, beispielsweise in regelmäßigen Abständen und/oder ereignisgesteuert und/oder benutzerinitiiert.

Eine weitere bevorzugte Ausgestaltung einer Antriebsvorrichtung sieht vor, dass die Steuervorrichtung ausgebildet ist, das ermittelte Maß für die Beladung des Förderbandes mit einem Maximalbeladungswert zu vergleichen und einen durch den Vergleich ermittelten Differenzwert auszugeben.

Eine weitere bevorzugte Ausgestaltung einer Antriebsvorrichtung sieht vor, dass die Steuervorrichtung ausgebildet ist, einen maximalen Zusatzbeladungszeitraum aus dem Differenzwert und einem Beladungswert pro Zeit zu ermitteln; und/oder einen maximalen Beladungswert pro Zeit aus dem Differenzwert und einem Zusatzbeladungszeitraum zu ermitteln.

Eine weitere bevorzugte Ausgestaltung einer Antriebsvorrichtung sieht vor, dass die Steuervorrichtung ausgebildet ist, das ermittelte Maß im Zeitverlauf zu speichern und vorzugsweise ein durchschnittliches Maß für eine Beladung des Förderbandes pro Zeiteinheit, vorzugsweise in einem bestimmten Zeitraum, abzuleiten.

Eine weitere bevorzugte Ausgestaltung einer Antriebsvorrichtung sieht vor, dass das Maß für die Beladung des Förderbandes eine Stromaufnahme des Bandantriebs ist; und die Messeinrichtung eine Strommessvorrichtung ist, die vorzugsweise ausgebildet und angeordnet ist, einen Strom einer Zuleitung des Bandantriebs zu ermitteln.

Eine weitere bevorzugte Ausgestaltung einer Antriebsvorrichtung sieht vor, dass das Maß für die Beladung des Förderbandes ein Drehmoment des Bandantriebs ist; und die Messeinrichtung mindestens einen Dehnungsmessstreifen umfasst, der vorzugsweise an einem Achszapfen einer Antriebsrolle des Bandantriebs angeordnet ist.

Eine weitere bevorzugte Ausgestaltung einer Antriebsvorrichtung sieht vor, dass das Maß für die Beladung des Förderbandes eine Lagerreaktion eines Lagers des Bandantriebs ist; und die Messeinrichtung mindestens einen Kraftsensor umfasst, der vorzugsweise an einem Lager einer Antriebsrolle des Bandantriebs angeordnet ist.

Eine weitere bevorzugte Ausgestaltung einer Antriebsvorrichtung umfasst eine Korrekturvorrichtung, die ausgebildet und angeordnet ist, in Abhängigkeit eines Korrektursignals eine Ausrichtung des Bandantriebs zu verändern; wobei das Maß für die Beladung des Förderbandes eine auf eine Korrekturvorrichtung wirkende Zugkraft ist; und die Messeinrichtung mindestens einen Dehnungsmessstreifen zur Ermittlung der auf die Korrekturvorrichtung wirkenden Zugkraft und vorzugsweise mindestens einen Förderbandfortschrittsdetektor umfasst.

Zu den Vorteilen, Ausführungsvarianten und Ausführungsdetails der Antriebsvorrichtung und ihrer Fortbildungen wird auf die vorangegangene Beschreibung zu den entsprechenden Merkmalen der Fördervorrichtung verwiesen.

Gemäß einem weiteren Aspekt der Erfindung wird die Eingangs genannte Aufgabe gelöst durch ein Verfahren zum Fördern von tierischen Produkten in einem landwirtschaftlichen Betrieb mittels einer Fördervorrichtung, insbesondere einer zuvor beschriebenen Fördervorrichtung, umfassend die Schritte: Antreiben eines Förderbandes in mindestens einer Förderrichtung mittels eines Bandantriebs, Ermitteln eines Maßes für eine Beladung des Förderbandes mittels einer Messeinrichtung, wobei das Maß für die Beladung des Förderbandes ein Leistungswert des Bandantriebs und/oder eine Lagerreaktion eines Lagers des Bandantriebs ist.

Das erfindungsgemäße Verfahren kann vorzugsweise fortgebildet werden nach den Unteransprüchen 11 bis 15.

Weitere vorteilhafte Ausgestaltungen des Verfahrens ergeben sich, wenn als Maß für die Beladung des Förderbandes mindestens eines aus der folgenden Gruppe ermittelt wird: ein Leistungswert des Bandantriebs, insbesondere eine Stromaufnahme und/oder ein Drehmoment des Bandantriebs; eine dehnende Verformung eines Elements der Fördervorrichtung; eine auf ein Element der Fördervorrichtung wirkende Kraft, insbesondere Druck- und/oder Zugkraft; eine Lagerreaktion eines Lagers des Bandantriebs; ein Gewicht der auf einem Abschnitt des Förderbandes befindlichen tierischen Produkte; eine Abweichung, insbesondere in vertikaler Richtung, einer Lage eines Abschnitts des Förderbandes von einer Initiallage; ein Förderbandfortschritt, insbesondere eine Förderbandgeschwindigkeit.

Weitere vorteilhafte Ausgestaltungen des Verfahrens ergeben sich insbesondere auch dadurch, dass für die Ermittlung des Maßes für die Beladung des Förderbandes eine Messeinrichtung verwendet wird, die ausgebildet ist als Kraftsensor, insbesondere Drucksensor und/oder Zugsensor, beispielsweise Wägezelle und/oder Dehnungsmessstreifen; Drehmomentsensor, beispielsweise Dehnungsmessstreifen; Strommessvorrichtung; Abstandssensor; und/oder Förderbandfortschrittsdetektor, insbesondere Drehzahlwächter und/oder Messrad.

Zu den Vorteilen, Ausführungsvarianten und Ausführungsdetails des Verfahrens und seiner Fortbildungen wird auf die vorangegangene Beschreibung zu den entsprechenden Vorrichtungsmerkmalen verwiesen.

Bevorzugte Ausführungsformen der Erfindung werden beispielhaft anhand der beiliegenden Figuren beschrieben. Es zeigen:
- Figur 1:: eine Teilansicht einer ersten beispielhaften Ausführungsform einer erfindungsgemäßen Fördervorrichtung;
- Figur 2:: eine Teilansicht einer zweiten beispielhaften Ausführungsform einer erfindungsgemäßen Fördervorrichtung;
- Figur 3:: eine Teilansicht einer dritten beispielhaften Ausführungsform einer erfindungsgemäßen Fördervorrichtung;
- Figur 4:: eine dreidimensionale Ansicht eines Trägergerüsts einer weiteren beispielhaften Ausführungsform einer erfindungsgemäßen Fördervorrichtung;
- Figur 5:: einen Teilquerschnitt einer Variante der in Figur 4 gezeigten Ausführungsform; und
- Figur 6:: einen Teilquerschnitt einer weiteren beispielhaften Ausführungsform einer erfindungsgemäßen Fördervorrichtung.

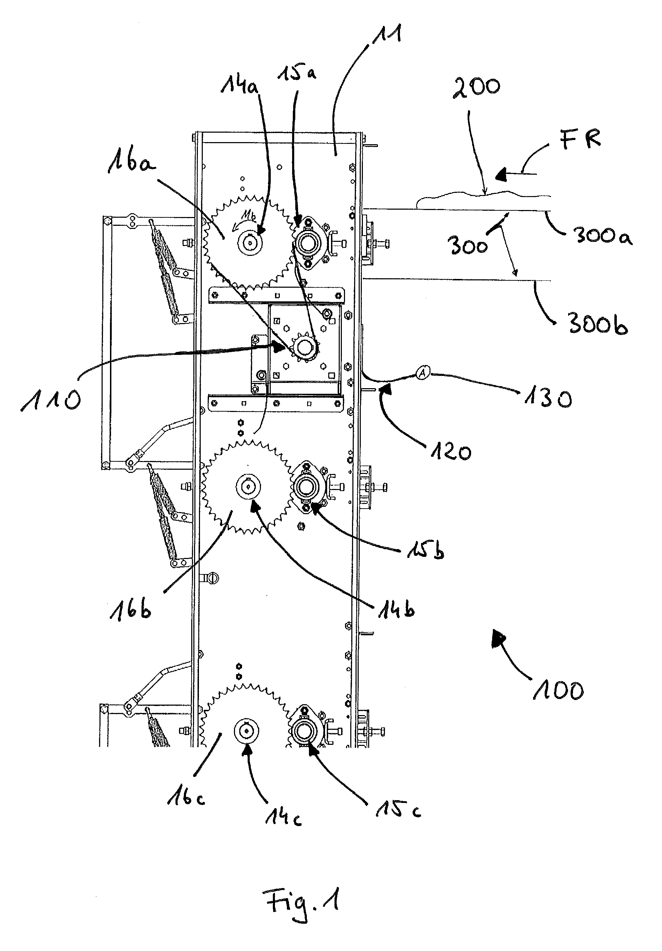

Die Figuren 1 bis 6 zeigen verschiedene beispielhaften Ausführungsformen einer erfindungsgemäßen Fördervorrichtung. Gleiche oder im Wesentlichen gleiche Elemente bzw. Elemente mit gleicher bzw. im Wesentlichen gleicher Funktion sind in den unterschiedlichen Figuren mit gleichen Bezugszeichen bezeichnet, teilweise mit einem nachgestellten "'".

In Figur 1 ist eine Teilseitenansicht einer ersten beispielhaften Ausführungsform einer erfindungsgemäßen Fördervorrichtung 100 gezeigt. Zu sehen ist ein Antriebsgestell 11, mit drei in vertikaler Richtung übereinander angeordneten Lagern 14a, b, c zur Lagerung von drei ebenfalls vertikal übereinander angeordneten Bandantrieben, die zum Antreiben von drei ebenfalls vertikal übereinander angeordneten Förderbändern dienen. An Lagern 15a, b, c sind Andruckrollen gelagert, welche das Förderband der jeweiligen Etage an die jeweilige Antriebsrolle pressen, um die Antriebsleistung auf das Förderband zu übertragen. In Figur 1 ist nur das oberste dieser drei Förderbänder der drei-etagig ausgebildeten Fördervorrichtung 100 dargestellt.

Das Förderband 300 ist als Endlosförderband mit einem Obertrum 300a und einem Untertrum 300b ausgebildet. Das Obertrum 300a ist mit tierischen Produkten, hier Kot 200, beladen, wobei das Förderband 300 durch den Bandantrieb derart angetrieben wird, dass der Kot 200 in eine Förderrichtung FR gefördert werden kann. Das Förderband 300 wird von Andruckrollen, die am Lager 15a gelagert sind, auf die Antriebsrolle angepresst, um über die dadurch entstehende Reibung in der Förderrichtung FR angetrieben zu werden.

Das Lager 14a ist mit einem Kettenrad 16a verbunden, welches über eine Kette von einem Motor angetrieben werden kann und damit ein Drehmoment M_{b} auf den Bandantrieb übertragen wird, der damit das Förderband 300 in Förderrichtung FR antreibt.

Als Maß für die Beladung des Förderbandes 300 mit tierischen Produkten, hier Kot 200, wird in der Ausgestaltung nach Figur 1 eine Motorstromüberwachung eingesetzt, d. h. mittels einer Strommessvorrichtung 130 wird der aufgenommene Strom des Antriebsmotors 110 in der Zuleitung 120 ermittelt. Aus diesem aufgenommenen Motorstrom kann das Drehmoment M_{b} bestimmt werden, welches benötigt wird, um das Förderband 300 zu bewegen. Mit zunehmender Beladung des Förderbandes 300 steigt das für den Antrieb des Förderbandes 300 erforderliche Drehmoment M_{b} und damit der aufgenommene Motorstrom. Wenn die Kennlinie des Antriebsmotors 110 bekannt ist, kann aus dem aktuell aus dem Motorstrom aufgenommenen erforderlichen Drehmoment die Differenz zu einem Maximaldrehmoment ermittelt werden und aus dieser Differenz, gegebenenfalls mit einem Sicherheitsabschlag, eine maximal möglicher Zuladung ermittelt werden, mit der das Förderband 300 zusätzlich beladen werden kann, und gleichzeitig ein zuverlässiger Antrieb des Förderbandes durch den Bandantrieb sichergestellt werden kann. Wenn das Maximaldrehmoment überschritten wird, kommt es zu einem Stillstand des Förderbandes 300 mit den entsprechenden Nachteilen.

Vorzugsweise wird eine Warnmeldung ausgegeben, wenn sich das aktuell erforderliche Drehmoment, welches aus dem aktuell aufgenommen Motorstrom ermittelt werden kann, einen vorbestimmten Abstand zum Maximaldrehmoment unterschreitet, so dass die auf den Förderband 300 befindlichen tierischen Produkte 200 abtransportiert werden können, bevor es zu einer Überladung des Förderbandes 300 kommt.

Insbesondere ist es bevorzugt, die Messung der Stromaufnahme in einer Strommessvorrichtung 130 mit einem Förderbandfortschrittsdetektor, z. B. einem Drehzahlwächter beispielsweise an einer Umlenkrolle oder einem separaten Messrad auf dem Förderband 300 zu kombinieren, um zu gewährleisten, dass Schlupf erkannt werden kann. Beginnender Schlupf zeigt an, dass die ermittelte Stromaufnahme kein direktes Maß für die auf das Förderband wirkende Antriebsleistung bzw. Zugkraft mehr ist, sondern bereits eine, ggf. auch zunächst geringe, Überladung eingetreten ist.

Eine weitere Möglichkeit, die Zugkraft des Förderbandes zu ermitteln, besteht beispielsweise darin, einen oder mehrere Dehnungsmessstreifen beispielsweise zwischen der Lagerung einer Antriebsrolle des Bandantriebs und dem abstützenden Seiten- bzw. Antriebsgestell 11 anzuordnen, um so direkt die dort wirkenden Zugkräfte zu ermitteln.

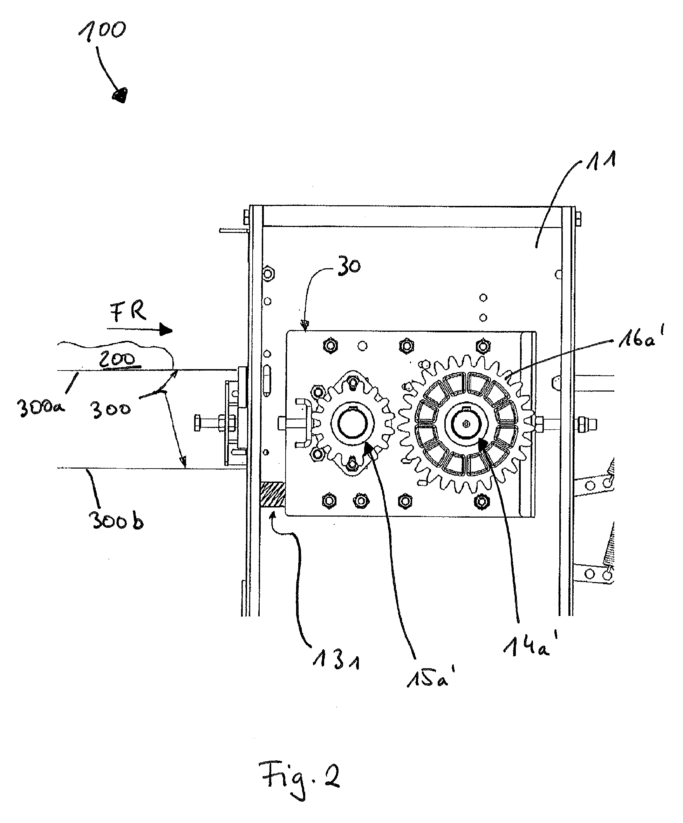

Eine weitere Möglichkeit der Ausgestaltung einer erfindungsgemäßen Fördervorrichtung 100 ist in Figur 2 dargestellt. Figur 2 zeigt eine Ausgestaltung einer Fördervorrichtung 100 ähnlich zu der in der Gebrauchsmusteranmeldung DE 20 2012 010 170.6 der Anmelderin gezeigten. Die dort beschriebene Fördervorrichtung 100 weist eine automatisierte Förderbandsteuerung auf, die einen störungsfreien Geradeauslauf der Förderbänder steuert. Sowohl die Andruckrollen als auch die Antriebsrolle sind dabei über eine Verstellplatte 30 horizontal verschieblich in und entgegen der Förderrichtung FR über die Lager 15a' und 14a' gelagert. Die Verstellplatte 30 ist vorzugsweise mit einem Stellmotor bzw. einer Korrekturvorrichtung verbunden, um die Verstellplatte 30 mit den Lagern 14a', 15a' horizontal verschieben zu können.

Als Maß für die Beladung des Förderbandes kann gemäß der Ausführung von Figur 2 eine Lagerreaktion des Lagers 14a' des Bandantriebs verwendet werden, wobei die zugehörige Messeinrichtung 131 vorzugsweise als Kraftsensor ausgebildet ist, der in Figur 2 an einem Lager 14a' einer Antriebsrolle des Bandantriebs angeordnet ist, und zwar indirekt über die Verstellplatte 30. Da sich auf beiden Seiten der Fördervorrichtung ein Seiten- bzw. Antriebsgestell 11 mit jeweils einer Verstellplatte 30 und entsprechenden Lagern 14a', 15a' für die Antriebsrolle und die Andruckrollen befindet, kann in den jeweiligen Kraftsensoren 131 jeweils eine Kraft ermittelt werden, die der Hälfte der Zugkraft F_{z} des Förderbandes 300 entspricht. Die resultierende Zugkraft des Förderbandes 300 tritt somit, um den Faktor 2 dividiert, an den Lagern 14a' der Antriebsrolle des Bandantriebs auf und kann über die Kraftsensoren 131 aufgenommen werden. In einer Steuervorrichtung (nicht dargestellt) können die von den Kraftsensoren 131 ermittelten Werte ausgewertet werden, um einen Rückschluss auf die Beladung des Förderbandes 300 mit tierischen Produkten zu ermöglichen.

Alternativ können die zu ermittelnden Zugkräfte auch über einen Dehnungsmessstreifen am Stellmotor der Verstellplatte 30 abgegriffen werden. Auch hierbei ist die Verbindung mit einem Förderbandfortschrittsdetektor bevorzugt. Auf diese Weise lassen sich zuverlässig die aktuell wirkenden Zugkräfte ermitteln und in einer Steuervorrichtung weiterverarbeiten, um ein Maß für die Beladung des Förderbandes zu ermitteln und damit die oben beschriebenen Vorteile zu verwirklichen.

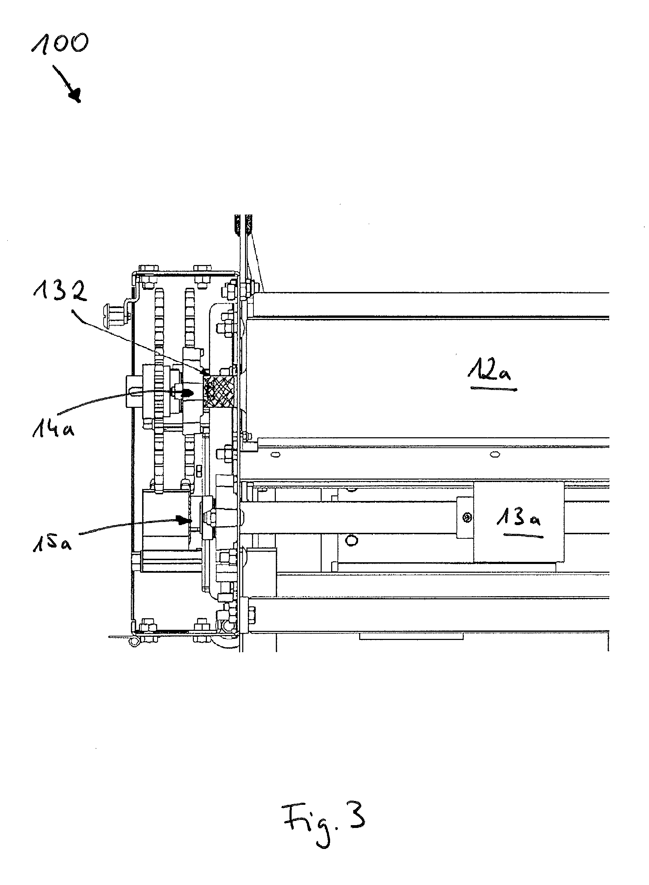

In Figur 3 ist eine weitere Möglichkeit zur Ausgestaltung einer erfindungsgemäßen Fördervorrichtung 100 dargestellt. In der Teilansicht von Figur 3 ist die am Lager 14a gelagerte Antriebsrolle 12a sowie eine am Lager 15a gelagerte Antriebsrolle 13a zu erkennen. In der in Figur 3 dargestellten Variante wird als Maß für die Beladung des Förderbandes ein Drehmoment verwendet, wobei die Messeinrichtung als Dehnungsmessstreifen 132 ausgebildet ist, der an einem Achszapfen der Antriebsrolle 12a des Bandantriebs angeordnet ist.

Auch bei dieser Variante können die die oben genannten Auswertemöglichkeiten mit den ebenfalls bereits beschriebenen Vorteilen anschließen.

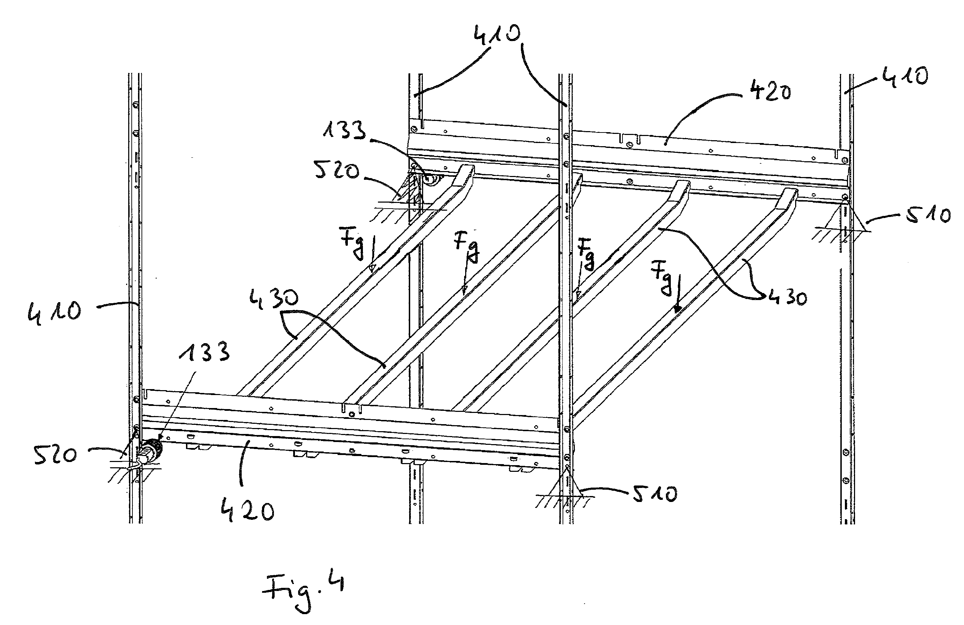

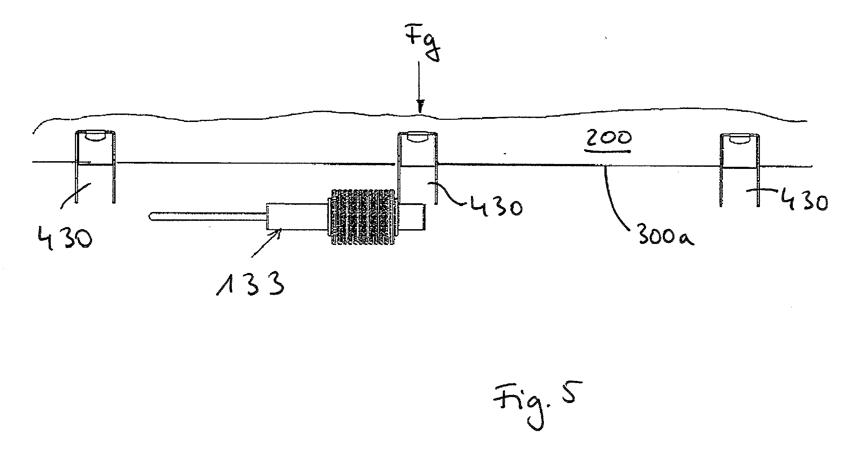

In den Figuren 4 und 5 sind Varianten dargestellt, bei denen als Maß für die Beladung des Förderbandes ein Gewicht der auf einem Abschnitt des Förderbandes befindlichen tierischen Produkte verwendet wird. Die Messeinrichtung ist dabei als Wägezelle 133 ausgebildet. In Figur 4 sind zwei Förderbandseitenlagerungen 420 an vertikalen Ständern 410 über Festlager 510 bzw. über Loslager 520 befestigt. An den Förderbandseitenlagerungen 420 sind wiederum Förderbandunterzüge 430 befestigt, auf denen das Förderband (in Fig. 4 nicht dargestellt) läuft. Auf die Förderbandunterzüge 430 wirkt die Gewichtskraft der auf dem Obertrum des Förderbandes zu befördernden tierischen Produkte F_{g}. Über die Befestigung der Förderbandunterzügen 430 an den Förderbandseitenlagerungen 420 wird diese Gewichtskraft F_{g} auf die Loslager 520 übertragen, an denen jeweils eine Wägezelle 133 angeordnet ist, welche die entsprechenden Gewichtskräfte aufnehmen kann.

Bei der in Figur 5 dargestellten Variante ist eine, bzw. vorzugsweise zwei Wägezellen 133 unter mindestens einem der Unterzüge 430 angeordnet, die dort direkt die Gewichtskraft F_{g} aufnehmen können.

Auch hier erfolgt nach Aufnahme des Gewichts als Maß für die Beladung des Förderbandes eine weitere Auswertung und weitere Verarbeitung vorzugsweise in einer nicht dargestellten Steuervorrichtung auf die oben beschriebene Weise mit den ebenfalls beschriebenen Vorteilen.

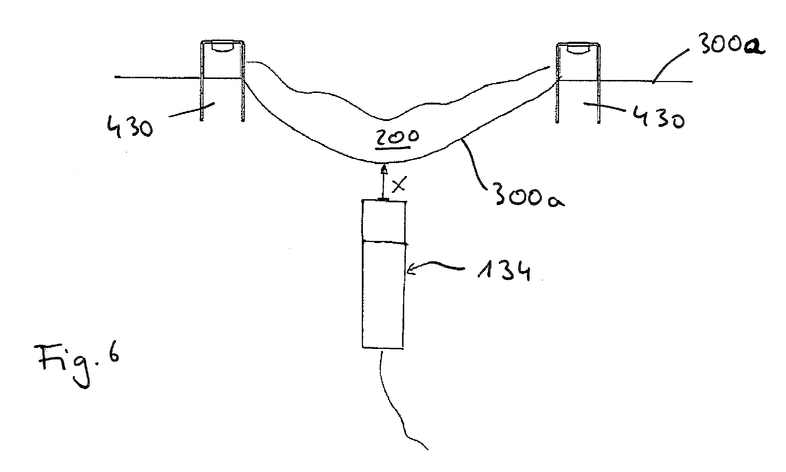

In Figur 6 ist eine weitere Variante dargestellt, bei der als Maß für die Beladung des Förderbandes eine Abweichung in vertikaler Richtung einer Lage eines Abschnitts des Förderbandes 300, insbesondere des Obertrums 300a, zwischen zwei Förderbandträgern, hier Förderbandunterzügen 430, von einer Initiallage verwendet wird. Die Messeinrichtung ist in der in Figur 6 dargestellten Variante als Abstandssensor 134 ausgebildet, der in vertikaler Richtung unterhalb des Untertrums 300a des Förderbandes zwischen zwei Förderbandträgern, hier Förderbandunterzügen 430, angeordnet ist. Die Initiallage des Untertrums 300a des Förderbandes ist in Figur 6 rechts und links neben den Förderbandunterzügen 430 zu erkennen. Der Abstandssensor 134 misst zwischen den beiden Förderbandunterzügen 430 jedoch nur noch einen Abstand X zum Untertrum 300a des Förderbandes in der Mitte zwischen den beiden Förderbandunterzügen 430. Verglichen mit der rechts und links von den Förderbandunterzügen 430 zu erkennenden Initiallage des Obertrums 300a des Förderbandes besteht somit zwischen den Unterzügen 430 eine Abweichung in vertikaler Richtung der Lage des Abschnitts des Förderbandes von dieser Initiallage. Diese Abweichung kann auch als Durchhang bezeichnet werden. Mit zunehmender Beladung des Förderbandes mit tierischen Produkten 200 nimmt dieser Durchhang zu, d. h. der vom Abstandssensor 134 gemessene Abstand x bis zum Obertrum 300a des Förderbandes nimmt ab.

Auch für diese Variante können nach Ermittlung des Maßes für die Beladung des Förderbandes, hier die Lageabweichung, die beschriebenen Auswertungs- und weiteren Verarbeitungsschritte erfolgen, wie beispielsweise Ausgabe von Warnmeldungen und/oder Berechnungen weiterer möglicher maximalen Zuladungen, Zuladungsraten und/oder Zuladungszeiten. Durch diese Auswertungen und weitergehenden Verarbeitungsschritte können einem Landwirt oder Betreibern von landwirtschaftlichen Betrieben und den dort tätigen Mitarbeitern Maßnahmen ermöglicht werden, die einer Überladung eines Förderbandes frühzeitig entgegenwirken und diese verhindern können. Auf diese Weise können nachteilige Situationen mit beladenen, aber nicht mehr förderfähigen Förderbändern vermieden bzw. verringert werden.

## Patentansprüche

1. Fördervorrichtung (100) zum Fördern von tierischen Produkten (200) in einem landwirtschaftlichen Betrieb, umfassend
- ein Förderband (300),
- einen Bandantrieb zum Antreiben des Förderbandes in mindestens einer Förderrichtung (FR),
- eine Messeinrichtung (130, 131, 132, 133, 134), die ausgebildet und angeordnet ist, ein Maß für eine Beladung des Förderbandes zu ermitteln,
wobei das Maß für die Beladung des Förderbandes (300) ein Leistungswert des Bandantriebs und/oder eine Lagerreaktion eines Lagers des Bandantriebs ist.

2. Fördervorrichtung (100) nach dem vorhergehenden Anspruch,
umfassend eine Steuervorrichtung, die ausgebildet ist, das ermittelte Maß für die Beladung des Förderbandes (300) mit einem Sollwert zu vergleichen und vorzugsweise eine Warnmeldung zu generieren, wenn ein vorbestimmter Abstand zu dem Sollwert über- oder unterschritten wird.

3. Fördervorrichtung (100) nach einem der beiden vorhergehenden Ansprüche,
**dadurch gekennzeichnet, dass** die Messeinrichtung (130, 131, 132, 133, 134) ausgebildet ist, das Maß für die Beladung des Förderbandes (300) wiederholt zu ermitteln, beispielsweise in regelmäßigen Abständen und/oder ereignisgesteuert und/oder benutzerinitiiert.

4. Fördervorrichtung (100) nach einem der vorhergehenden Ansprüche,
**dadurch gekennzeichnet, dass** die Steuervorrichtung ausgebildet ist, das ermittelte Maß für die Beladung des Förderbandes (300) mit einem Maximalbeladungswert zu vergleichen und einen durch den Vergleich ermittelten Differenzwert auszugeben.

5. Fördervorrichtung (100) nach dem vorhergehenden Anspruch,
**dadurch gekennzeichnet, dass** die Steuervorrichtung ausgebildet ist,
- einen maximalen Zusatzbeladungszeitraum aus dem Differenzwert und einem Beladungswert pro Zeit zu ermitteln; und/oder
- einen maximalen Beladungswert pro Zeit aus dem Differenzwert und einem Zusatzbeladungszeitraum zu ermitteln.

6. Fördervorrichtung(100) nach einem der vorhergehenden Ansprüche,
**dadurch gekennzeichnet, dass** die Steuervorrichtung ausgebildet ist, das ermittelte Maß im Zeitverlauf zu speichern und vorzugsweise ein durchschnittliches Maß für eine Beladung des Förderbandes (300) pro Zeiteinheit, vorzugsweise in einem bestimmten Zeitraum, abzuleiten.

7. Fördervorrichtung (100) nach einem der vorhergehenden Ansprüche,
**dadurch gekennzeichnet, dass** das Maß für die Beladung des Förderbandes (300) mindestens eines aus der folgenden Gruppe ist:
- eine Stromaufnahme und/oder ein Drehmoment des Bandantriebs;
- eine dehnende Verformung eines Elements der Fördervorrichtung;
- eine auf ein Element der Fördervorrichtung wirkende Kraft, insbesondere Druck- und/oder Zugkraft;
- ein Gewicht der auf einem Abschnitt des Förderbandes befindlichen tierischen Produkte (200);
- eine Abweichung, insbesondere in vertikaler Richtung, einer Lage eines Abschnitts des Förderbandes von einer Initiallage;
- ein Förderbandfortschritt, insbesondere eine Förderbandgeschwindigkeit.

8. Fördervorrichtung (100) nach einem der vorhergehenden Ansprüche,
**dadurch gekennzeichnet, dass** die Messeinrichtung ausgebildet ist als
- Kraftsensor (131), insbesondere Drucksensor und/oder Zugsensor, beispielsweise Wägezelle (133) und/oder Dehnungsmessstreifen;
- Drehmomentsensor, beispielsweise Dehnungsmessstreifen (132);
- Strommessvorrichtung (130);
- Abstandssensor (134); und/oder
- Förderbandfortschrittsdetektor, insbesondere Drehzahlwächter und/oder Messrad.

9. Antriebsvorrichtung für eine Fördervorrichtung (100) zum Fördern von tierischen Produkten (200) in einem landwirtschaftlichen Betrieb, insbesondere für eine Fördervorrichtung nach einem der vorhergehenden Ansprüche, umfassend
- einen Bandantrieb zum Antreiben eines Förderbandes (300) in einer Förderrichtung (FR),
- eine Messeinrichtung (130, 131, 132, 133, 134), die ausgebildet und angeordnet ist, ein Maß für eine Beladung des Förderbandes zu ermitteln,
wobei das Maß für die Beladung des Förderbandes (300) ein Leistungswert des Bandantriebs und/oder eine Lagerreaktion eines Lagers des Bandantriebs ist.

10. Verfahren zum Fördern von tierischen Produkten (200) in einem landwirtschaftlichen Betrieb mittels einer Fördervorrichtung (100), insbesondere einer Fördervorrichtung nach einem der vorhergehenden Ansprüche 1-8,
umfassend die Schritte:
- Antreiben eines Förderbandes (300) in mindestens einer Förderrichtung (FR) mittels eines Bandantriebs,
- Ermitteln eines Maßes für eine Beladung des Förderbandes mittels einer Messeinrichtung (130, 131, 132, 133, 134),
wobei das Maß für die Beladung des Förderbandes (300) ein Leistungswert des Bandantriebs und/oder eine Lagerreaktion eines Lagers des Bandantriebs ist.

11. Verfahren nach dem vorhergehenden Anspruch,
**dadurch gekennzeichnet, dass** das ermittelte Maß für die Beladung des Förderbandes (300) mit einem Sollwert verglichen wird und vorzugsweise eine Warnmeldung generiert wird, wenn ein vorbestimmter Abstand zu dem Sollwert über- oder unterschritten wird.

12. Verfahren nach einem der beiden vorhergehenden Ansprüche,
**dadurch gekennzeichnet, dass** das Maß für die Beladung des Förderbandes (300) wiederholt ermittelt wird, beispielsweise in regelmäßigen Abständen und/oder ereignisgesteuert und/oder benutzerinitiiert.

13. Verfahren nach einem der vorhergehenden Ansprüche 10-12,
**gekennzeichnet durch** die Schritte:
- Vergleichen des ermittelten Maßes für die Beladung des Förderbandes (300) mit einem Maximalbeladungswert;
- Ausgabe eines **durch** den Vergleich ermittelten Differenzwertes.

14. Verfahren nach dem vorhergehenden Anspruch,
**gekennzeichnet durch** den Schritt:
- Ermitteln eines maximalen Zusatzbeladungszeitraums aus dem Differenzwert und einem Beladungswert pro Zeit; und/oder
- Ermitteln eines maximalen Beladungswerts pro Zeit aus dem Differenzwert und einem Zusatzbeladungszeitraum.

15. Verfahren nach einem der vorhergehenden Ansprüche 10-14,
**gekennzeichnet durch** den Schritt:
- Speichern des ermittelten Maßes für eine Beladung des Förderbandes (300) im Zeitverlauf;
- vorzugsweise Ableiten eines durchschnittlichen Maßes für eine Beladung des Förderbandes pro Zeiteinheit, vorzugsweise in einem bestimmten Zeitraum.
